# EUROPÄISCHE PATENTSCHRIFT

(11) **EP 2 726 327 B1**
(45) Veröffentlichungstag und Bekanntmachung des Hinweises auf die Patenterteilung: **21.03.2018**
(21) Anmeldenummer: 12733633.7
(22) Anmeldetag: 26.06.2012
(51) Int. Cl.: B60Q 1/26, B60Q 1/12

(54) **NAHBEREICH-KURVENLICHT IM AUSSENSPIEGEL**
SHORT-RANGE CORNERING LIGHT IN AN EXTERIOR MIRROR
FEU DE VIRAGE DE FAIBLE PORTÉE DANS UN RÉTROVISEUR EXTÉRIEUR

(30) Priorität: 29.06.2011 DE 102011105983
(43) Veröffentlichungstag der Anmeldung: 07.05.2014
(73) Patentinhaber: SMR Patents S.à.r.l., 1653 Luxembourg (LU)
(72) Erfinder: FRITZ, Daniel, 70186 Stuttgart (DE)
(74) Vertreter: Weber-Bruls, Dorothée
(86) Internationale Anmeldenummer: PCT/EP2012/062360
(87) Internationale Veröffentlichungsnummer: WO 2013/000913

(56) Entgegenhaltungen:
- EP-A1- 1 304 260
- EP-A1- 1 712 417
- WO-A1-2008/137634
- DE-A1-102006 048 503
- DE-A1-102007 000 371
- DE-A1-102008 005 702
- US-A- 5 428 512
- US-A1- 2006 146 555

## Beschreibung

Es sind heute verschiedene Vorrichtungen für eine adaptive Frontbeleuchtung eines Fahrzeugs erhältlich. Diese Systeme versuchen, dynamisch eine Frontbeleuchtung oder Kurvenbeleuchtungsfunktionalität für ein Fahrzeug bereitzustellen.
Die zurzeit erhältlichen Vorrichtungen verwenden typischerweise mechanische Vorrichtungen, um die Kurvenbeleuchtungsfunktionalität bereitzustellen. Zum Beispiel können Motoren, wie Schrittmotoren, eine Linse, einen Reflektor, eine Anbringung oder eine Lichtquelle eines Scheinwerfers oder ein gesamtes Lichtmodul drehen. Die Schrittmotoren können Signale zum Lenken des Lichtstrahls in horizontaler und/oder vertikaler Richtung empfangen. Als Funktion der Fahrzeuggeschwindigkeit und des Lenkradwinkels kann ein bestimmter Lenkwinkel des Lichtstrahls definiert werden. Zusätzlich kann ein typischer Bereich der Drehung des Lichtstrahls +-15 Grad nach links bzw. rechts und +-15 Grad nach oben bzw. nach unten betragen. Als Ergebnis kann eine Strasse durch die Kurvenbeleuchtungsfunktionalität effektiver beleuchtet werden, wodurch Sicherheit und Komfort vergrössert werden.

Die Patentanmeldung DE 10 2006 039 182 A1 beschreibt ein Fahrzeug mit einer Lichtstrahlungseinrichtung mit zwei oder mehr LED-Segmenten und einer Steuereinrichtung zum Variieren der emittierten Strahlungsintensität der LED-Segmente.

Außerdem wurde ein adaptives Frontbeleuchtungssystem vorgeschlagen, das als "Pixellicht" ("Pixel Light") bezeichnet wird. Bei dieser Vorrichtung reflektieren Mikrospiegeleinrichtungen jeweils ein Pixel eines Lichtstrahls. Ferner ist der Lichtstrahl an Ort und Stelle fixiert, kann aber programmiert werden, um sich den Bedingungen vor einem Fahrzeug anzupassen. Die internationale veröffentlichte PCT-Patentanmeldung Nr. PCT/IB2007/051355 beschreibt eine Vorrichtung, die ein Flüssigkristallelement vor einer Lichtquelle anordnet, um den Lichtstrahl zu lenken.

Aus der EP 2221219 ist eine Vorrichtung mit mindestens eine Halbleiterlichtquelle bekannt, die in einer vorgegebenen Position in einem Tagfahrlichtmodul des Kraftfahrzeuges integriert ist. Dies bedeutet, dass die mindestens eine Halbleiterlichtquelle in dem Tagfahrlichtmodul unbeweglich bzw. in einer fixierten Position angeordnet ist. Zur Erzeugung der Kurvenlicht- und/oder Abbiegelichtfunktion wird die mindestens eine Halbleiterlichtquelle nicht gedreht oder geschwenkt, sondern dazu geschaltet.

Alle bekannten Lösungen für aktive Kurvenausleuchtung haben den Nachteil, dass durch die Anbaulage des Frontscheinwerfers ein Bereich seitlich des Fahrzeuges nicht ausgeleuchtet werden kann.

Die WO 2008/ 137634 A1 beschreibt ein Beleuchtungsmodul, das etwa an einem Türgriff eines Kraftfahrzeugs anzuordnen sein kann und ein Logo oder Dergleichen auf einen Zielbereich projiziert.

Die DE 10 2008 005 702 A1 offenbart ein Verfahren zur Ausleuchtung von Kraftfahrzeugen unter Verwendung von in die Karosserie integrierten Leuchten.

Aus der US 2006/ 146555 A1 ist es bekannt, Leuchtdioden für Beleuchtung des Bereichs außerhalb des Fahrzeugs in einen Fahrzeugaußenspiegel zu integrieren.

Die EP 1 304 260 A1 betrifft einen Außenspiegel für ein Fahrzeug mit einer Vielzahl funktioneller Einheiten, darunter Modulen zum Beleuchten unterschiedlicher Bereiche.

Die US 5 428 512 A befasst sich mit einer Seitenbeleuchtung für ein Fahrzeug, die abhängig von einem Lenkradeinschlag aktiviert wird.

Aus der DE 10 2007 000371 A1 beschreibt ähnlich hierzu die Erfassung von Informationen zum Fahrzustand eines Fahrzeugs oder seinem Umgebungszustand und eine entsprechende Ansteuerung eines Lichtemitters.

Bei einer Querführungsunterstützung für ein Fahrzeug gemäß der DE 10 2006 048 503 A1 wird eine Lichtmarkierung parallel zur Fahrzeuglängsachse projiziert.

Die EP 1 712 417 A1 beschreibt einen Fahrzeugaußenspiegel mit einer Vielzahl von Leuchtmitteln zum Beleuchten unterschiedlicher Abschnitte, je nach Einschlagwinkel der Fahrzeugräder und Fahrgeschwindigkeit.

Die Erfindung löst das Problem durch die Bereitstellung eines Fahrzeugs mit den Merkmalen gemäß Patentanspruch 1.

### Beschreibung der Erfindung

Die Erfindung wird nun anhand von Ausführungsbeispielen mit Bezug zu den Zeichnungen näher erläutert.
Fig. 1: ist eine schematische Draufsicht einer Beleuchtungsverteilung bei Verwendung einer Vorrichtung für eine elektronische adaptive Frontbeleuchtung eines Fahrzeugs.
Fig. 2 zeigt die Ausleuchtungsbereiche der Erfindung.
Fig. 3 zeigt ein Ausführungsbeispiel der Erfindung.
Fig. 4 zeigt eine erfindungsgemäße Beleuchtung.

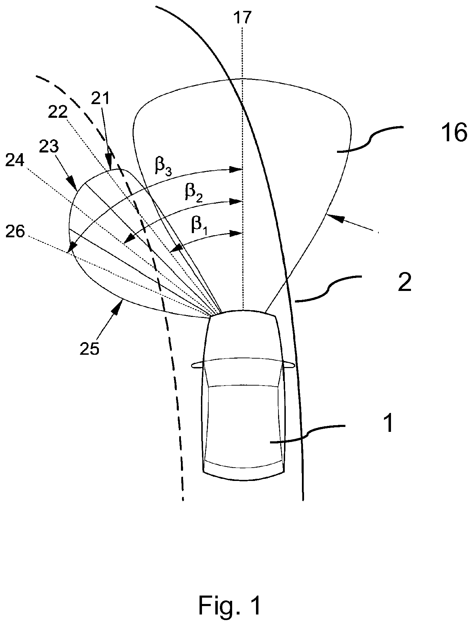

Fig. 1 zeigt eine schematische Draufsicht einer Beleuchtungsverteilung bei Verwendung einer Vorrichtung für die elektronische adaptive Frontbeleuchtung eines Fahrzeugs. Diese Figur zeigt eine Fahrsituation, in der das Fahrzeug 1 auf einer Straße 2 fährt, die sich nach links krümmt. Zusätzlich zeigt diese Figur eine beispielhafte Ausführungsform eines elektronischen adaptiven Frontbeleuchtungsvorrichtung -LED-Moduls im Frontscheinwerfer mit drei unterschiedlichen Lichtsektoren L1, L2, L3.

Wie in Fig. 1 gezeigt, projiziert die Abblend-Lichtquelle eine Standardlichtverteilung 16, die eine Mittelachse 17 aufweist, vor das Fahrzeug. Zusätzlich projizieren die Lichtsektoren L1, L2, L3 Lichtstrahlen 21, 23 bzw. 25, die Mittelachsen 22, 24 bzw. 26 aufweisen, in einem Winkel [beta]1, [beta]2 bzw. [beta]3 von der Mittelachse 17 der Standardlichtverteilung 16. Jeder der Lichtsektoren L1, L2, L3 kann auf der Basis des LED-Typs und der für jeden Sektor erforderlichen Lichtmenge eine oder mehrere LEDs umfassen. Ferner kann die Lichtintensität jedes der Lichtsektoren unabhängig gesteuert werden. Auf diese Weise können die Lichtverteilungen 16, 21, 23, 25 auf der Basis einer bestimmten Fahrsituation, einer Fahrzeuggeschwindigkeit, eines Lenkradwinkels, einer Nähe zu anderen Fahrzeugen, eines gewählten Fahrkomforts-bzw. Verhaltensprogramms, einer Betätigung einer Eingabeeinrichtung wie etwa eines Schalters oder einer beliebigen anderen Mensch-Maschine-Schnittstelle, von Straßeneigenschaften wie Krümmung oder Breite usw. optimal gesteuert werden.

Ferner kann jede LED jedes Lichtsektors ein optisches Element umfassen, um eine sanftere Lichtverteilung über jeden Lichtsektor hinweg sicherzustellen. Das optische Element kann eine Linse, einen Reflektor usw. sein. Das konkrete benutzte optische Element kann zum Beispiel von den konkreten Winkeln [beta]1, [beta]2, [beta]3 und der Größe des gewünschten Beleuchtungsbereichs für jeden Lichtsektor L1, L2, L3 abhängen.

Die Lichtsektoren 21, 23, 25 beleuchten bei der Fahrsituation, in der das Fahrzeug auf einer Straße fährt, die sich nach links krümmt, Bereiche vor dem Fahrzeug und links des Fahrzeugs.

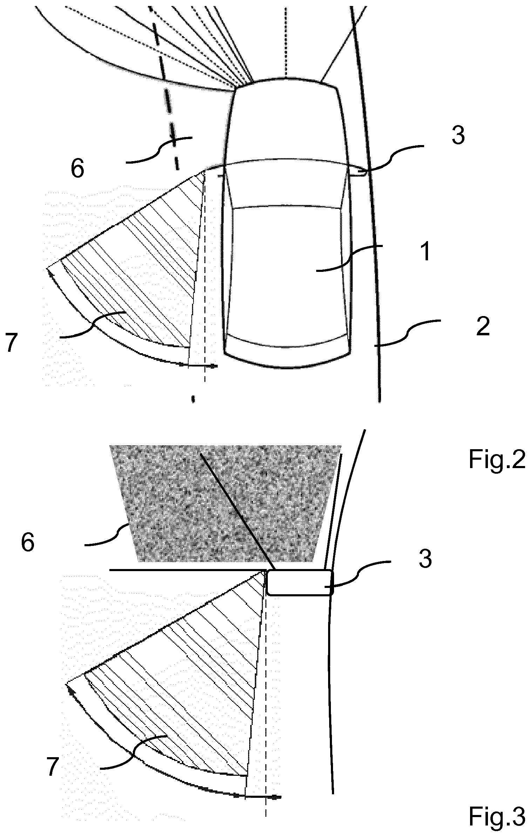

Figur 2 zeigt den Ausschnitt link neben dem Fahrtzeug 2. Auf beiden Seiten des Fahrzeugs sind Außenspiegel 3 angeordnet. Die Spiegelblinker 5 müssen dabei den eingezeichneten schraffierten Bereich 7 ausleuchten, der sich 5 Grad zur Fahrzeuglängsachse hin und 55 Grad von ihr weg erstreckt. Diese Ausleuchtung wird mit den Leuchten für den Lichtsektor L5 erreicht.

Die gesamte Fläche zwischen dem ausgeleuchteten Bereich 16 bis 25 der Frontscheinwerfer wird nicht erhellt. Will das Fahrzeug aber abbiegen, reicht der adaptive Anteil der Frontscheinwerfer nicht aus, um den dem Fahrzeug benachbarten Bereich der Straße zu erhellen. Hierzu wird im Außenspiegel 3 eine weitere Lichtquelle für den Lichtsektor L4 verwendet. Dieser Lichtsektor L4 beleuchtet einen Bereich 6, der sich mindestens von der Verlängerung der Außenspiegel 3 nach außen bis zur Karosseriekontur 7 des Fahrzeugs erstreckt.

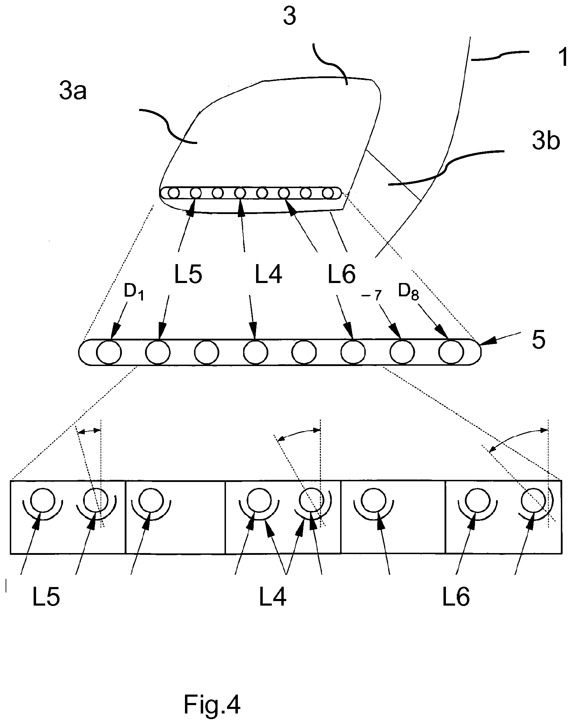

Fig 4 zeigt eine beispielhafte Ausführungsform eines Außenspiegels 3 für adaptive Beleuchtung eines Fahrzeugs. Der Außenspiegel 3 besteht in diesem Beispiel aus einem Spiegelkopf, der auf seiner in der Zeichnung nicht sichtbaren Seite ein reflektierendes Element umfasst, und einem Spiegelfuß, mit dem der Außenspiegel am Fahrzeug befestigt ist. Das Fahrzeug 1 ist in der Zeichnung mit einem skizzierten Konturverlauf angedeutet. Der Außenspiegel enthält ein Beleuchtungsmodul 5, das sich in diesem Beispiel entlang der Längsachse des Außenspiegels, die von Fahrzeug wegführt, erstreckt.

Das Beleuchtungsmodul 5 kann einen Blinker, eine Seitenmarkierungs-Lichtquelle, ein integriertes Tagfahrlicht-(DRL-) und ein adaptives Kurvenlicht umfassen..

Wie bei dieser beispielhaften Ausführungsform gezeigt, umfasst das integrierte DRL-Tagfahrlicht, der Blinker und das adaptive Kurvenlicht LEDs D1 bis D8 und Lichtsektoren L4 bis L6. Es versteht sich, dass das Beleuchtungsmodul 5 nicht auf die dargestellte beispielhafte Ausführungsform beschränkt ist. Die Anzahl der Lichtsektoren Lx kann variiert werden, und die Anordnung der Lichtsektoren Lx kann auch variiert werden, wie etwa horizontal, vertikal, diagonal, in einer geraden Linie, in einer gekrümmten Linie usw. Zusätzlich können sich die Lichtsektoren L4 bis L6 jeweils denselben Ort wie eines der Tagfahrlichter D1 bis D8 teilen. Wie in Fig. 4 gezeigt, teilt sich der Lichtsektor L5 denselben Ort wie das Tagfahrlicht D2, der Lichtsektor L4 denselben Ort wie das Tagfahrlicht D4 und der Lichtsektor L6 denselben Ort wie das Tagfahrlicht D6.

Fig 4 zeigt ferner schematisch optische Elemente als halbkreisförmige Elemente, die. verwendet werden, um das Licht jeder DRL-LED und jeder Kurvenlicht-LED in eine bestimmte Richtung zu richten. Die optischen Elemente umfassen Reflektoren, Linsen usw.

Die Lichtsektoren L5, L4, L6 enthalten LEDs, um bei der Fahrsituation, in der das Fahrzeug auf einer Straße fährt, die sich nach links krümmt, Bereiche vor dem Fahrzeug und links des Fahrzeugs zu beleuchten.

In einem anderen Ausführungsbeispiel enthält das Beleuchtungsmodul 5 nur einen Spiegelblinker und ein Kurvenlicht. Dadurch sind nur zwei Lichtsektoren definiert, die aber beide jeweils Lichtquellen für die jeweils andere Funktion enthalten können. Da die Blinkfunktion amberfarbenes Licht abstrahlen muss, sind die LEDs, die die Blinkfunktion ausüben dezidiert nur für diese Funktion vorhanden.

Neben der Anordnung und Ausreichung der LEDs für die unterschiedlichen Funktionen ist die Ansteuerung für den Einsatz des adaptiven Kurvenlicht im Außenspiegel von Bedeutung. Da das Kurvenlicht im Außenspiegel nur bei scharfen Abbiegevorgängen sinnvoll zum Einsatz kommt, ist es sinnvoll die Aktivierung mit Fahrzeugparamatern vor allem mit der Geschwindigkeit zu koppeln.

Es ist sinnvoll die Aktivierung des adaptiven Kurvenlichtes im Außenspiegel nur unterhalb einer Schwellgeschwindigkeit zu aktivieren.

Das Beleuchtungsmodul wird über das Türsteuermodul oder einen Controller im Außenspiegel, der Daten über ein Bussystem erhält, angesteuert.

Der Steuereinrichtung werden Eingangsdaten zugeführt, die Fahrzeugdaten umfassen, wie zum Beispiel Fahrzeuggeschwindigkeit, Lenkradwinkel, Straßeneigenschaften usw. Die Steuereinrichtung steuert dann jeden der adaptiven Lichtsektoren Lx des linken und rechten Beleuchtungsmoduls unabhängig voneinander, um jeden der LED-Lichtsektoren einzuschalten, auszuschalten und/oder seine Lichtintensität zu variieren.

Eine sinnvolle Ansteuerung erhält man wenn folgende Fahrzeugparameter erfüllt sind:
- Das Fahrzeug steht oder fährt nur mit einer geringen Geschwindigkeit, beispielsweise bis 30km/h.
- Der Blinker ist betätigt
- Und das Fahrlicht ist aktiviert.
- Der Lenkeinschlagswinkel ist größer als ein Schwellwert.

Mit diesem Parametersatz ist ein scharfes Abbiegen bei geringer Geschwindigkeit bei gestörten Sichtverhältnissen definiert und das adaptive Kurvenlicht wird aktiviert.

## Patentansprüche

1. Fahrzeug (1)
mit einer Karosserie, die eine Karosseriekontur (7) aufweist,
mit einem Frontscheinwerfer, der eine Abblend-Lichtquelle und Lichtsektoren (L1, L2, L3) aufweist, wobei
die Abblend-Lichtquelle eine Standardlichtverteilung (16), die eine Mittelachse (17) definiert, vor das Fahrzeug (1) projiziert,
die Lichtsektoren (L1, L2, L3) zum Projizieren von Lichtstrahlen (21, 23, 25) für eine Kurvenbeleuchtungsfunktion vorgesehen sind, welche Lichtstrahlen (21, 23, 25) Mittelachsen (22, 24, 26) aufweisen, in unterschiedlichen Winkeln (β1, β2, β3) von der Mittelachse (17) der Standardlichtverteilung (16),
mit einer Steuerung, die Fahrzeugparameter verarbeitet und die Standardlichtverteilung (16) und die Lichtstrahlen (21, 23, 25) steuert, und
mit einem Außenspiegel (3), der mindestens eine Beleuchtungseinheit (5) enthält, die wenigstens einen Spiegelblinker umfasst, wobei
die Beleuchtungseinheit (5) Mittel zur Ausleuchtung des Nahbereichs (6) für ein Nahbereichs-Kurvenlicht aufweist,
sich der Nahbereich (6) mindestens von einer Verlängerung des Außenspiegels (3) nach außen in Fahrtrichtung bis zu der Karosseriekontur (7) des Fahrzeugs (1) nach vorne erstreckt, und
die Steuerung ausgelegt ist, die Mittel unter einer Schwellgeschwindigkeit des Fahrzeugs (1) zu aktivieren.

2. Fahrzeug (1) nach Anspruch 1, **dadurch gekennzeichnet, dass** der Spiegelblinker einen Lichtsektor (L5) beleuchtet, der sich 5° zur Fahrzeuglängsachse hin und 55° von dieser weg erstreckt.

3. Fahrzeug (1) nach Anspruch 1, **dadurch gekennzeichnet, dass** die Beleuchtungseinheit (5) LEDs enthält, die für unterschiedliche Lichtfunktionen definiert sind.

4. Fahrzeug (1) nach Anspruch 1, **dadurch gekennzeichnet, dass** die Beleuchtungseinheit (5) mindestens drei Lichtsektoren (L4, L5, L6) festlegt, die unabhängig voneinander steuerbar sind.

5. Fahrzeug (1) nach Anspruch 1, **dadurch gekennzeichnet, dass** die Beleuchtungseinheit zusätzliche Lichtsektoren für Tageslicht enthält.

6. Fahrzeug (1) nach Anspruch 1, **dadurch gekennzeichnet, dass** die Beleuchtungseinheit (5) zusätzliche Sektoren für Positionsleuchten enthält.

7. Fahrzeug (1) nach Anspruch 1, **dadurch gekennzeichnet, dass** die Steuerung ausgelegt ist, die Beleuchtungseinheit (5) in der Kombination Blinker und Kurvenlicht zu aktivieren.

8. Fahrzeug (1) nach Anspruch 1 oder 7, **dadurch gekennzeichnet, dass** die Steuerung ausgelegt ist, das Kurvenlicht beim Überschreiten einer Schwelle für den Lenkwinkel zu aktivieren.

## Claims

1. A vehicle (1),
having bodywork which has a bodywork contour (7),
having a headlamp which has a low-beam light source and light sectors (L1, L2, L3), wherein
the low-beam light source projects a standard light distribution (16) defining a center axis (17) forward of the vehicle (1),
the light sectors (L1, L2, L3) are provided to project light beams (21, 23, 25) for a cornering lighting function, which light beams (21, 23, 25) have center axes (22, 24, 26), at different angles (β1, β2, β3) from the center axis (17) of the standard light distribution (16),
having a control system which processes vehicle parameters and controls the standard light distribution (16) and the light beams (21, 23, 25), and
having an exterior mirror (3) which contains at least one lighting unit (5) that comprises at least one mirror blinker, wherein
the lighting unit (5) has means for illuminating the short-range area (6) for a short-range cornering light,
the short-range area (6) extends forward at least outwardly from an extension of the exterior mirror (3) in the driving direction to the body contour (7) of the vehicle (1), and the control system is designed to activate the means below a threshold speed of the vehicle (1).

2. The vehicle (1) according to Claim 1, **characterized in that** the mirror blinker illuminates a light sector (L5) which extends 5° towards the longitudinal axis of the vehicle and 55° away from it.

3. The vehicle (1) according to Claim 1, **characterized in that** the lighting unit (5) contains LEDs which are specified for different light functions.

4. The vehicle (1) according to Claim 1, **characterized in that** the lighting unit (5) stipulates at least three light sectors (L4, L5, L6) which can be controlled independently of each other.

5. The vehicle (1) according to Claim 1, **characterized in that** the lighting unit contains additional light sectors for daytime running lights.

6. The vehicle (1) according to Claim 1, **characterized in that** the lighting unit (5) contains additional sectors for position lights.

7. The vehicle (1) according to Claim 1, **characterized in that** the control system is designed to activate the lighting unit (5) in the blinker and cornering light combination.

8. The vehicle (1) according to Claim 1 or 7, **characterized in that** the control system is designed to activate the cornering light on exceeding a threshold for the steering angle.

## Revendications

1. Véhicule (1)
avec une carrosserie qui présente un profil de carrosserie (7),
avec un phare avant, qui présente une source lumineuse de feu de croisement et des secteurs lumineux (L1, L2, L3),
la source lumineuse de feu de croisement projetant devant le véhicule (1) une distribution de lumière standard (16) qui définit un axe médian (17),
les secteurs lumineux (L1, L2, L3) étant prévus pour la projection de rayons lumineux (21, 23, 25) pour une fonction d'éclairage de virage, lesquels rayons (21, 23, 25) présentent des axes médians (22, 24, 26), à différents angles (β1, β2, β3) de l'axe médian (17) de la distribution lumineuse standard (16),
avec une commande qui traite les paramètres de véhicule et commande la distribution lumineuse standard (16) et les rayons lumineux (21, 23, 25), et
avec un rétroviseur extérieur (3) qui comprend au moins une unité d'éclairage (5), qui comprend au moins un clignotant de rétroviseur,
l'unité d'éclairage (5) présentant des moyens pour l'éclairage de faible portée (6) pour un feu d'éclairage de faible portée,
la zone de faible portée (6) s'étendant vers l'avant au moins d'un prolongement du rétroviseur extérieur (3), vers l'extérieur dans le sens de déplacement, jusqu'au profil de carrosserie (7) du véhicule (1), et la commande étant conçue pour activer les moyens sous une vitesse seuil du véhicule (1).

2. Véhicule (1) selon la revendication 1, **caractérisé en ce que** le clignotant de rétroviseur éclaire un secteur lumineux (L5) qui s'étend de 5° en direction de l'axe longitudinal du véhicule et de 55° dans la direction opposée à cet axe.

3. Véhicule (1) selon la revendication 1, **caractérisé en ce que** l'unité d'éclairage (5) comprend des LED qui sont définies pour différentes fonctions lumineuses.

4. Véhicule (1) selon la revendication 1, **caractérisé en ce que** l'unité d'éclairage (5) définit au moins trois secteurs lumineux (L4, L5, L6) qui peuvent être commandés indépendamment les uns des autres.

5. Véhicule (1) selon la revendication 1, **caractérisé en ce que** l'unité d'éclairage comprend des secteurs lumineux supplémentaires pour la lumière du jour.

6. Véhicule (1) selon la revendication 1, **caractérisé en ce que** l'unité d'éclairage (5) comprend des secteurs lumineux supplémentaires pour des feux de position.

7. Véhicule (1) selon la revendication 1, **caractérisé en ce que** la commande est conçue pour activer l'unité d'éclairage (5) dans la combinaison clignotant et feu de virage.

8. Véhicule (1) selon la revendication 1 ou 7, **caractérisé en ce que** la commande est conçue pour activer le feu de virage lors du dépassement d'un seuil pour l'angle de braquage.
